Europäisches Patentamt

European Patent Office

Office européen des brevets

(19)

(11) Numéro de publication : **0 307 293 B1**

(12) **FASCICULE DE BREVET EUROPEEN**

(45) Date de publication du fascicule du brevet :
18.03.92 Bulletin 92/12

(51) Int. Cl.⁵ : **F16B 1/00**

(21) Numéro de dépôt : **88402220.3**

(22) Date de dépôt : **02.09.88**

(54) **Système d'accouplement de deux corps par exemple un chariot et un poste d'usinage.**

(30) Priorité : **11.09.87 FR 8712617**

(43) Date de publication de la demande :
**15.03.89 Bulletin 89/11**

(45) Mention de la délivrance du brevet :
**18.03.92 Bulletin 92/12**

(84) Etats contractants désignés :
**AT BE CH DE ES GB IT LI NL SE**

(56) Documents cités :
**DE-A- 1 577 004**
**FR-A- 2 305 268**
**US-A- 3 633 813**
**US-A- 3 638 983**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Le Goff, Jean-François**
**8 rue Gagnée**
**F-94400 Vitry-sur-Seine (FR)**

(74) Mandataire : **Bonnetat, Christian et al**
**CABINET BONNETAT 23, Rue de Léningrad**
**F-75008 Paris (FR)**

EP 0 307 293 B1

## Description

La présente invention concerne les systèmes d'accouplement de deux corps comme, par exemple, un chariot et un poste d'usinage tels que ceux que l'on trouve dans des endroits du type "atelier flexible".

Afin d'augmenter la rentabilité dans les techniques modernes d'usinage, il a été réalisé des ateliers dits "flexibles" qui comportent schématiquement un ensemble de postes d'usinage répartis de façon prédéterminée selon les fonctions qui doivent y être accomplies et au moins un chariot qui peut se déplacer de façon autonome en étant guidé par différents moyens, par exemple optiques, magnétiques, électriques, etc..., pour aller s'accoupler avec les postes d'usinage, pour les desservir en produits ou outils nécessaires à leurs fonctions respectives. Pour qu'un tel chariot puisse parfaitement desservir un poste de travail, les systèmes d'accouplement selon l'art antérieur imposent qu'il soit parfaitement positionné par rapport à ce poste de travail. La conception des moyens de guidage des chariots est donc alors très complexe et d'un prix de revient très élevé. De plus, ces moyens de guidage complexes sont sujets à des pannes relativement fréquentes, ce qui contribue à augmenter encore le coût de revient global de l'atelier flexible.

Par le brevet FR-A-2 305 268, on connaît déjà un système pour l'accouplement de deux corps pouvant avoir des mouvements relatifs l'un par rapport à l'autre d'une incertitude d'amplitude donnée, du type dans lequel l'un desdits corps comporte une partie en saillie ayant une section d'extrémité de valeur déterminée et des moyens expansibles transversalement, tandis que l'autre desdits corps comporte une cavité ouverte ayant une ouverture d'entrée dont la section a des dimensions supérieures à celles de ladite extrémité de la partie en saillie, la valeur de la différence entre ces deux sections étant au moins égale à celle de ladite incertitude, lesdits moyens expansibles transversalement étant susceptibles de presser la paroi interne de ladite cavité après introduction de ladite partie en saillie dans ladite cavité.

La présente invention a pour but de réaliser un système d'accouplement de ce type entre deux corps, comme un chariot et un poste d'usinage dans un atelier du type flexible, qui permette de relier l'un des corps à l'autre même si les deux corps ne sont pas parfaitement positionnés l'un par rapport à l'autre, qui soit d'une réalisation simple, d'une mise en oeuvre aisée et d'une très grande fiabilité, tout en contribuant à réduire le coût de revient de l'atelier flexible qu'il équipe.

A cette fin, selon l'invention, le système d'accouplement du type mentionné ci-dessus est caractérisé en ce qu'il comporte :

– une tête montée sur l'un desdits corps et susceptible de tourner autour d'un premier axe par rapport audit corps, ladite tête comportant ladite cavité et étant pressée élastiquement par des premiers moyens élastiques tendant à amener ladite cavité à une première position de référence et ledit premier axe étant perpendiculaire à la ligne centrale de ladite cavité ; et

– une base montée sur l'autre desdits corps et susceptible de tourner autour d'un second axe par rapport audit autre corps, ladite base ayant ladite partie en saillie extensible et ladite base étant pressée par de seconds moyens élastiques tendant à faire prendre à ladite partie en saillie une seconde position de référence, ledit second axe étant perpendiculaire à la ligne centrale de ladite partie en saillie.

Dans un mode avantageux de réalisation :

– lesdits premiers moyens élastiques comprennent deux ressorts opposés fixés sur ledit corps et pressant entre eux un ergot fixé sur ladite tête ; et

– lesdits seconds moyens élastiques comprennent deux ressorts opposés fixés sur l'autre desdits corps et pressant entre eux un ergot fixé sur ladite base.

Le système selon l'invention peut comporter :

– un bâti monté sur l'un desdits corps et susceptible de tourner autour dudit premier axe par rapport audit corps, ladite tête montée sur ledit bâti et susceptible de tourner autour d'un troisième axe par rapport audit bâti, ladite tête étant pressée élastiquement par lesdits premiers et des troisièmes moyens élastiques en direction de la première position de référence, lesdits premiers moyens élastiques étant disposés entre ledit corps et ledit bâti et lesdits troisièmes moyens élastiques étant disposés entre ledit bâti et ladite tête ; et

– une platine montée sur l'autre desdits corps et susceptible de tourner autour dudit second axe par rapport audit autre corps, ladite base montée sur ladite platine et susceptible de tourner autour d'un quatrième axe par rapport à ladite platine, ladite base étant pressée élastiquement par lesdits seconds et des quatrièmes moyens élastiques vers ladite seconde position de référence, lesdits seconds moyens élastiques étant disposés entre ledit autre corps et ladite platine et lesdits quatrièmes moyens élastiques étant disposés entre ladite platine et ladite base.

Dans ce système, il est avantageux que :

– lesdits premiers moyens élastiques comprennent deux ressorts opposés fixés sur l'un desdits corps et pressant entre eux un ergot fixé sur ledit bâti ;

– lesdits seconds moyens élastiques comprennent deux ressorts opposés fixés sur l'autre corps et pressant entre eux un ergot fixé sur ladite platine ;

– lesdits troisièmes moyens élastiques comprennent deux ressorts opposés fixés sur ledit bâti et pressant entre eux un ergot fixé sur ladite tête ; et

– lesdits quatrièmes moyens élastiques comprennent deux ressorts opposés fixés sur ladite platine et pressant entre eux un ergot fixé sur ladite base.

De préférence, ladite partie en saillie est montée coulissante sur ladite base et lesdits moyens transversalement expansibles comportent des vérins.

Avantageusement, ladite tête et ladite base ont des moyens d'entraînement pour transférer des pièces de l'un des deux corps à l'autre et vice et versa.

Les figures du dessin annexé feront bien comprendre comment l'invention peut être réalisée. Sur ces figures, des références identiques désignent des éléments semblables.

La figure 1 représente, à titre d'exemple, un schéma de principe d'un atelier du type flexible auquel s'applique avantageusement un système d'accouplement selon l'invention.

La figure 2 représente un mode de réalisation d'un système d'accouplement de deux corps selon l'invention.

La figure 3 représente, sous forme schématique, la réalisation d'un détail d'un système d'accouplement perfectionné en accord avec la réalisation selon la figure 2, permettant de repositionner le système dans sa position origine.

Les figures 4,5 et 6 représentent respectivement trois schémas explicatifs du fonctionnement d'un système d'accouplement selon la réalisation illustrée sur la figure 2.

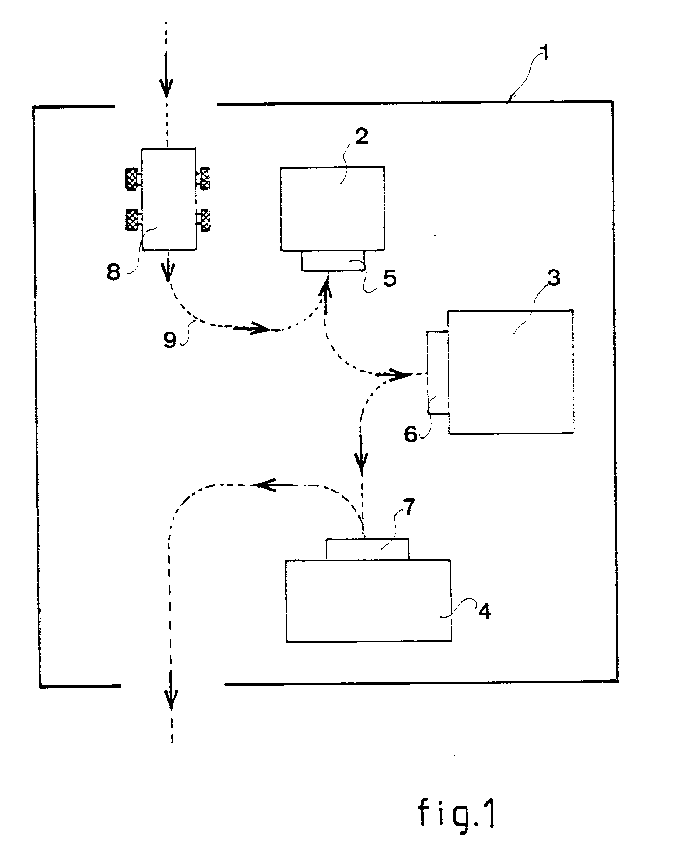

La figure 1 représente, à titre d'exemple d'application du système d'accouplement, un atelier flexible 1 comprenant, par exemple, trois postes de travail 2,3,4 comme, par exemple, des machines outils d'usinage de pièces mécaniques telles que perceuses, décolleteuses, tours, etc...

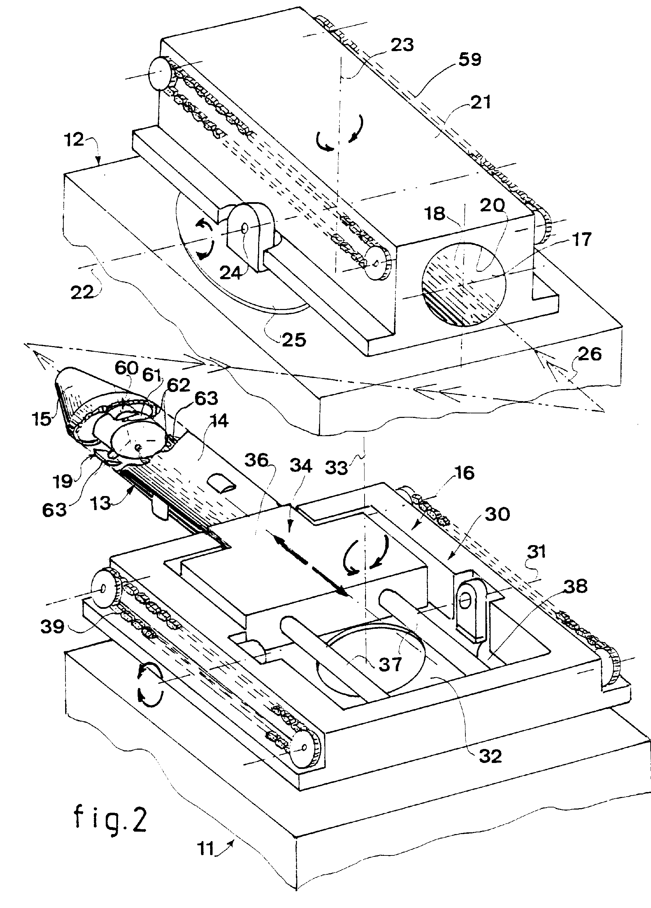

Ces postes comprennent respectivement une plateforme d'entrée 5,6,7 par laquelle ils peuvent être alimentés automatiquement en pièces à traiter. Dans les ateliers modernes, ces postes de travail sont alimentés par des chariots sur lesquels sont placées les pièces à traiter. Dans l'exemple illustré, il n'a été représenté qu'un chariot 8. Ce chariot est guidé automatiquement au moyen de différents capteurs, par exemple de type optique, magnétique, mécanique, etc..., et programmé pour suivre un certain chemin 9. Comme mentionné ci-dessus, avec les systèmes d'accouplement selon l'art antérieur, il est nécessaire que cette programmation permette au chariot de se placer d'une façon très précise par rapport au poste de travail. Par contre, avec le système d'accouplement tel qu'illustré sur les figures 2 à 6, il est possible d'utiliser un dispositif de guidage de chariots beaucoup moins élaboré.

Ces figures illustrent un système d'accouplement de deux corps quelconques 11, 12 pouvant être effectivement le chariot et un poste de travail selon la figure 1 et pouvant avoir des mouvements relatifs l'un par rapport à l'autre avec une incertitude d'amplitude donnée.

Le premier corps 11 comporte une partie en saillie 13 avantageusement de forme oblongue comme, par exemple, une tige 14 dont l'extrémité 15 a une section d'une valeur diminuant progressivement lui donnant une forme sensiblement conique. A cette partie en saillie, sont associés des moyens 16 pour commander son déplacement par rapport au premier corps 11.

Le second corps 12 comporte une cavité 17 ayant une ouverture d'entrée 18 dont la section a une dimension supérieure à au moins celle de l'extrémité 15 de la partie en saillie 13, la valeur de la différence entre ces deux sections étant au moins égale à celle de l'incertitude de l'amplitude des mouvements relatifs des deux corps 11 et 12 mentionnée ci-dessus, lorsqu'ils doivent s'accoupler l'un à l'autre. Dans un mode avantageux de réalisation, la section intérieure la plus petite sur toute la longueur de la cavité 17 est supérieure à la section la plus grande sur toute la longueur de la partie en saillie 13, la valeur de la différence entre ces deux sections étant également au moins égale à celle de l'incertitude donnée définie ci-dessus. Ainsi, la partie en saillie 13 pourra-t-elle pénétrer dans la cavité 17 sur une distance relativement importante, en assurant un accouplement sûr et efficace.

Le système comprend en plus des moyens 19 pour exercer au moins un couple de forces de réaction entre la partie en saillie 13 et la paroi intérieure 20 de la cavité 17. Ces moyens peuvent être constitués par des vérins 60, par exemple de type classique à tige et cylindre et à commande électrique ou hydraulique, les cylindres 61 étant fixés à la partie en saillie 13, de préférence noyés dans sa masse, de sorte que seules les tiges 62 puissent émerger latéralement de cette partie en saillie. Les vérins 60 sont situés dans la portion de la partie en saillie apte à pénétrer dans la cavité 17 et les extrémités extérieures des tiges sont avantageusement munies de patins 63 dont la forme leur permet de s'escamoter dans la paroi latérale de la partie en saillie 13, lorsque les tiges des vérins sont rentrées, pour ne pas gêner le mouvement de translation de cette partie en saillie dont il est fait mention ci-après, et pour mieux s'adapter à la forme de la paroi intérieure 20 de la cavité 17. Dans une réalisation avantageuse, le dispositif pourra comprendre trois vérins dont les tiges seront orientées pour se déplacer suivant des directions à cent vingt degrés les unes par rapport aux autres, comme représenté sur la figure 2.

Avantageusement, la cavité 17 est réalisée dans une tête 21 montée sur le second corps 12 de façon qu'elle ait au moins un degré de liberté de déplacement. Dans l'exemple de réalisation illustré, la tête 21 est montée mobile autour de deux axes de rotation 22, 23. C'est ainsi qu'elle est liée à un arbre de rotation 24 qui lui permet de pivoter par rapport à un bâti 25 monté lui-même pivotant autour de l'axe 23 sur le second corps 12, ces deux axes formant entre eux un angle différent d'un angle plat, et avantageusement un angle droit, pour pouvoir orienter l'axe 26 de l'entrée de la cavité dans un cône solide ayant une valeur d'angle au sommet fonction de l'incertitude donnée mentionnée ci-avant.

Comme mentionné ci-dessus, l'axe 26 de l'entrée de la cavité peut être orienté dans un cône solide. Il en est de même pour l'axe de la partie en saillie 13, par les moyens 16. Ces moyens comprennent, dans une forme possible de réalisation, une embase 30 montée pivotante autour d'un axe 31 sur une platine 32 montée sur le premier corps 11, elle-même pivotante autour d'un autre axe 33, par exemple et avantageusement perpendiculaire à l'axe 31.

Le système d'accouplement comprend aussi des moyens 34 pour monter la partie en saillie 13 en translation par rapport à l'embase 30. Un exemple de réalisation de ces moyens est illustré sur la figure 2. Ils sont constitués par un tiroir 36 monté sur des glissières de guidage 37, par exemple rectilignes, situées dans un logement 38 réalisé dans l'embase 30, la partie en saillie étant montée solidaire du tiroir 36. Le déplacement en translation du tiroir par rapport à l'embase est obtenu, par exemple, par un entraînement par tous moyens dont le mouvement alternatif est obtenu par un moteur (non représentés dans un souci de simplification du dessin), ou par un moyen équivalent tel qu'un vérin.

Pour un fonctionnement correct et répétitif du système d'accouplement décrit ci-dessus, celui-ci comporte en outre des moyens 40 pour ramener la partie en saillie 13 dans une position origine, de même que la cavité 17, ces positions étant, en fait, avantageusement des positions moyennes dans le volume de déplacement possible tel que défini ci-avant des deux corps 11 et 12 l'un par rapport à l'autre. Ces moyens peuvent ainsi coopérer entre, par exemple, la tête 21 et la bâti 25, entre le bâti 25 et le second corps 12, pour ramener la cavité 17 à une position origine, et aussi entre l'embase 30 et la platine 32, entre la platine 32 et le premier corps 11, pour ramener automatiquement la partie en saillie 13 à une position origine.

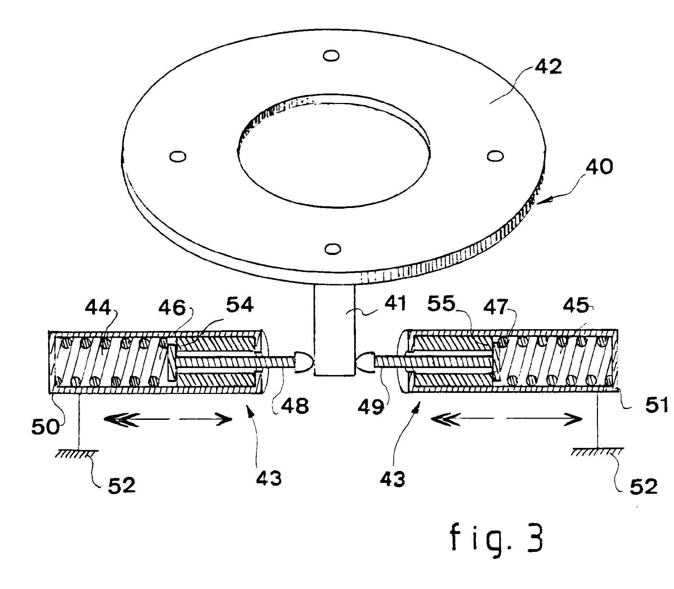

La figure 3 représente un mode de réalisation possible pour de tels moyens 40. Ils comportent alors un ergot 41 lié à un premier 42 des éléments cités ci-dessus et des moyens 43 pour exercer sur cet ergot 41 deux forces élastiques de sens contraires, ces moyens pouvant être constitués par deux ressorts 44, 45 de traction ou de poussée, une de leurs extrémités 46, 47 étant reliée respectivement par des poussoirs 48, 49 à l'ergot 41, leurs deux autres extrémités 50, 51 étant respectivement reliées à l'autre second élément 52 par rapport auquel doit être repositionné le premier élément 42.

Ainsi, quand un effort est exercé sur un des deux éléments 42 ou 52, l'ergot le transmet par l'un des poussoirs 48, 49 à l'un des deux ressorts 44, 45 qui se comprime et qui augmente ainsi sa force de réaction pour tendre à compenser celle de l'effort, tandis que l'autre ressort n'exerce aucune action. Quand l'effort sur l'élément s'annule, le ressort n'étant plus soumis à une contreforce, il se détend pour tendre à faire revenir le poussoir à sa position d'arrêt contre une butée interne 54, 55. Comme l'extrémité des poussoirs agit sur l'ergot 41, celui-ci est ramené à sa position origine prédéterminée, ainsi que l'élément 42 auquel il est associé qui peut alors participer à un nouvel accouplement.

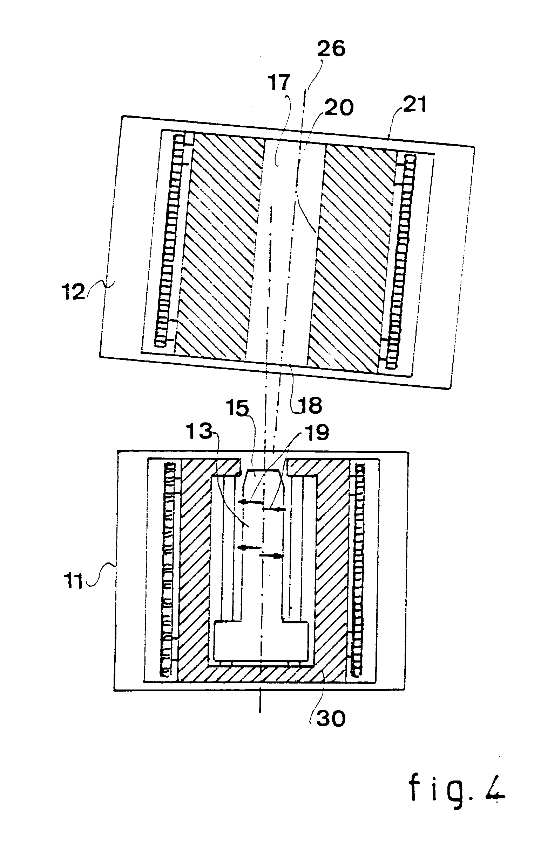

Le système décrit ci-dessus fonctionne de la façon suivante, cette description étant explicitée plus particulièrement en regard des figures 4 à 6. Il est tout d'abord précisé que le premier corps 11, par exemple un chariot, peut venir se positionner, avec une certaine incertitude dans son placement, en regard du second corps 12, par exemple un poste de travail, cette incertitude étant définie, par exemple, par la valeur de la distance maximale pouvant séparer deux points appartenant respectivement aux deux corps 11, 12, sans pour autant que l'on puisse connaître avec précision la position relative de ces deux points.

La figure 4 représente les deux corps 11, 12 approximativement en regard l'un de l'autre, positionnés cependant pour que la partie en saillie 13 soit contenue dans la projection de la section d'entrée 18 de la cavité 17. Cette condition est une conséquence des valeurs respectives des sections définies ci-avant. Il est précisé que les deux éléments, en l'occurrence la partie en saillie 13 et la cavité 17, sont disposés dans leur position origine par rapport à leur corps respectif, grâce aux moyens de remise en position origine 40 décrits ci-dessus.

Quand les deux corps sont dans la position telle que représentée sur la figure 4, la partie en saillie 13 est commandée en translation sur les glissières 37 pour que l'extrémité conique 15 pénètre dans la cavité 17, ceci étant possible puisque la section de cette extrémité est plus petite que celle de l'entrée 18 de la cavité 17. Quand cette partie en saillie a pénétré dans la cavité, il arrive que son extrémité vienne buter contre la paroi intérieure 20 de la cavité et la force de réaction entre ces deux éléments oblige les deux éléments à s'orienter l'un par rapport à l'autre, et d'autant mieux s'ils ont des structures telles que décrites en regard de la figure 2, sachant que cette réaction s'effectue en opposition de celle donnée par les moyens de remise en position origine 40.

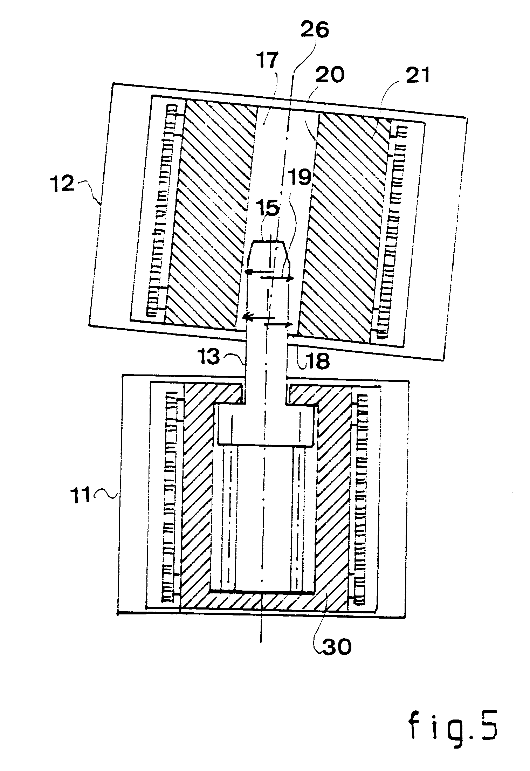

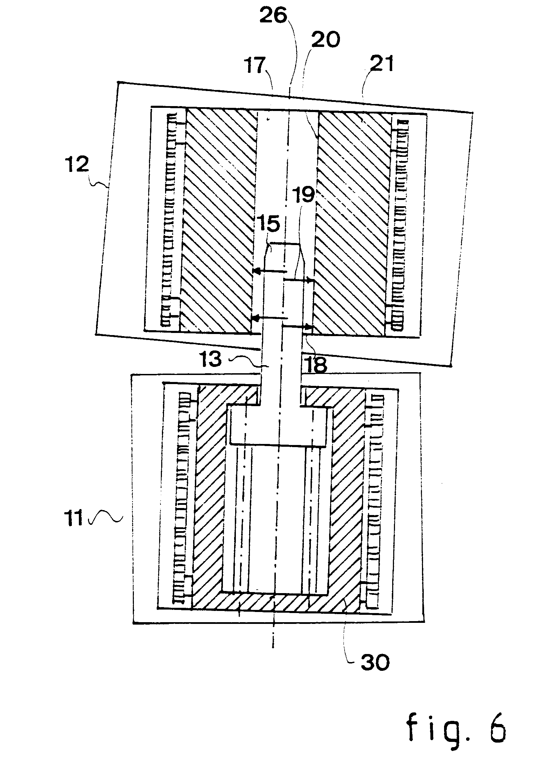

Par contre, il est aussi possible que cette partie en saillie pénètre directement dans la cavité sans venir au contact de sa paroi intérieure 20, comme plus précisément illustré sur la figure 5. Dans l'un ou l'autre cas, lorsque la partie en saillie est suffisamment rentrée dans la cavité, les vérins 19 sont commandés dans le sens de leur allongement pour que leurs têtes viennent se plaquer contre la paroi interne 20 de la cavité. Par le simple effet du couple de forces opposées, d'une part les axes de la partie en saillie et de la cavité se trouvent parfaitement alignés et, d'autre, part, les deux éléments sont solidarisés, figure 6.

Puisque la tête 21 et l'embase 30 sont bien alignées, les pièces à traiter qui sont sur le premier corps 11 peuvent passer automatiquement sur la tête 21 du second corps 12, en prenant l'exemple d'application donné ci-avant. Pour ce faire, l'embase 30 et la tête 21 peuvent comporter des chaînes d'entraînement, respectivement 39 et 59, qui peuvent être couplées à des plateaux-supports sur lesquels peuvent être disposés les pièces à traiter ou les pièces usinées.

Quand une telle opération est terminée, les vérins 19 sont rétractés, la partie en saillie est rentrée dans le logement 38 et les différents éléments sont remis en position origine grâce aux moyens de remise en position origine 40. Les deux éléments 13 et 21 sont prêts à recommencer une telle opération d'accouplement, pour les deux mêmes corps ou pour un autre chariot avec le même poste de travail, ou pour le même chariot avec un autre poste, sachant que des systèmes d'accouplement tous identiques à celui décrit ci-dessus peuvent équiper tous les corps d'un même atelier.

Il est apparent qu'un tel dispositif d'accouplement ne présente pas de difficulté majeure de mise en oeuvre et qu'il permet de compenser les incertitudes de positionnement des deux corps. Il permet ainsi de pouvoir utiliser des chariots munis de moyens de conduite parfois peu performants, contribuant ainsi à réduire encore le coût de l'installation d'un atelier flexible.

## Revendications

1. Système pour l'accouplement de deux corps (11,12) pouvant avoir des mouvements relatifs l'un par rapport à l'autre d'une incertitude d'amplitude donnée, du type dans lequel l'un desdits corps comporte une partie en saillie (13) ayant une section d'extrémité (15) de valeur déterminée et des moyens (60) expansibles transversalement, tandis que l'autre desdits corps comporte une cavité ouverte (17) ayant une ouverture d'entrée (18) dont la section a des dimensions supérieures à celles de ladite extrémité de la partie en saillie, la valeur de la différence entre ces deux sections étant au moins égale à celle de ladite incertitude, lesdits moyens (60) expansibles transversalement étant susceptibles de presser la paroi interne de ladite cavité (17) après introduction de ladite partie en saillie dans ladite cavité, caractérisé en ce qu'il comporte :

– une tête (21) montée sur l'un (12) desdits corps et susceptible de tourner autour d'un premier axe (23) par rapport audit corps (12), ladite tête (21) comportant ladite cavité (17) et étant pressée élastiquement par des premiers moyens élastiques (40) tendant à amener ladite cavité (17) à une première position de référence, et ledit premier axe (23) étant perpendiculaire à la ligne centrale de ladite cavité (17) ; et

– une base (30) montée sur l'autre (11) desdits corps et susceptible de tourner autour d'un second axe (33) par rapport audit autre corps (11), ladite base (30) ayant ladite partie en saillie (13) extensible et ladite base (30) étant pressée par de seconds moyens élastiques (40) tendant à faire prendre à ladite partie en saillie (13) une seconde position de référence, ledit second axe (33) étant perpendiculaire à la ligne centrale de ladite portion en saillie (13).

2. Système selon la revendication 1, caractérisé en ce que :

– lesdits premiers moyens élastiques comprennent deux ressorts opposés (44,45) fixés sur ledit corps (12) et pressant entre eux un ergot (41) fixé sur ladite tête (21) ; et

– lesdits seconds moyens élastiques comprennent deux ressorts opposés (44,45) fixés sur l'autre desdits corps (11) et pressant entre eux un ergot (41) fixé sur ladite base (30).

3. Système selon la revendication 1, caractérisé en ce qu'il comporte :

– un bâti (25) monté sur l'un (12) desdits corps et susceptible de tourner autour dudit premier axe (23) par rapport audit corps (12), ladite tête (21) étant montée sur ledit bâti (25) et susceptible de tourner autour d'un troisième axe (24) par rapport audit bâti (25), ladite tête (21) étant pressée élastiquement par lesdits premiers et des troisièmes moyens élastiques (40) en direction de la première position de référence, lesdits premiers moyens élastiques étant disposés entre ledit corps (12) et ledit bâti (25) et lesdits troisièmes moyens élastiques étant disposés entre ledit bâti (25) et ladite tête (21) ; et

– une platine (32) montée sur l'autre (11) desdits corps et susceptible de tourner autour dudit second axe (33) par rapport audit autre corps (11), ladite base (30) étant montée sur ladite platine (32) et susceptible de tourner autour d'un quatrième axe (31) par rapport à ladite platine (32), ladite base (30) étant pressée élastiquement par lesdits seconds et des quatrièmes moyens élastiques (40) vers ladite seconde position de référence, lesdits seconds moyens élastiques étant disposés entre ledit autre corps (11) et ladite platine (32) et lesdits quatrièmes moyens élastiques étant disposés entre ladite platine (32) et ladite base (30).

4. Système selon la revendication 3, caractérisé en ce que :

– lesdits premiers moyens élastiques comprennent deux ressorts opposés (44,45) fixés sur l'un desdits corps (12) et pressant entre eux un ergot (41) fixé sur ledit bâti (25) ;

– lesdits seconds moyens élastiques comprennent deux ressorts opposés (44,45) fixés sur l'autre corps (11) et pressant entre eux un ergot (41) fixé sur ladite platine (32) ;

– lesdits troisièmes moyens élastiques comprennent deux ressorts opposés (44,45) fixés sur ledit bâti (25) et pressant entre eux un ergot (41) fixé sur ladite tête (21) ; et

– lesdits quatrièmes moyens élastiques comprennent deux ressorts opposés (44 et 45) fixés sur ladite platine (32) et pressant entre eux un ergot (41) fixé sur ladite base (30).

5. Système selon la revendication 3, caractérisé en ce que ladite partie en saillie (13) est montée coulissante sur ladite base (30).

6. Système selon la revendication 3, caractérisé en ce que lesdits moyens transversalement expansibles comportent des vérins.

7. Système selon la revendication 3, caractérisé en ce que ladite tête (21) et ladite base (30) ont des moyens d'entraînement (39,59) pour transférer des pièces de l'un des deux corps à l'autre et vice versa.

**Claims**

1. System for coupling two bodies (11,12) able to move relatively with respect to each other by a given incertainty of amplitude, of the type in which one of said bodies comprises a projecting part (13) having an end section (15) of determined value and transversely expansible means (60), whereas the other of said bodies comprises an open cavity (17) having an inlet opening (18) whose section has dimensions larger than those of said end of the projecting part, the value of the difference between these two sections being at least equal to that of said incertainty, said transversely expansible means (60) being able to press the inner wall of said cavity (17) after introduction of said projecting part into said cavity, characterized in that it comprises :

– a head (21) mounted on one (12) of said bodies and able to rotate about a first axis (23) with respect to said body (12), said head (21) comprising said cavity (17) and being resiliently pressed by first elastic means (40) tending to bring said cavity (17) to a first reference position, and said first axis (23) being perpendicular to the central line of said cavity (17) ; and

– a base (30) mounted on the other (11) of said bodies and able to rotate about a second axis (33) with respect to said other body (11), said base (30) having said extensible projecting part (13) and said base (30) being pressed by second elastic means (40) tending to bring said projecting part (13) to a second reference position, said second axis (33) being perpendicular to the central line of said projecting part (13).

2. System according to claim 1, characterized in that :

– said first elastic means comprise two opposite springs (44,45) fixed on said body (12) and pressing therebetween a catch (41) fixed on said head (21) ; and

– said second elastic means comprise two opposite springs (44,45) fixed on the other (11) of said bodies and pressing therebetween a catch (41) fixed on said base (30).

3. System according to claim 1, characterized in that it comprises :

– a frame (25) mounted on one (12) of said bodies and able to rotate about said first axis (23) with respect to said body (12), said head (21) being mounted on said frame (25) and able to rotate about a third axis (24) with respect to said frame (25), said head (21) being resiliently pressed by said first, and third elastic means (40) towards said first reference position, said first elastic means being disposed between said body (12) and said frame (25) and said third elastic means being disposed between said frame (25) and said head (21) ; and

– a plate (32) mounted on the other (11) of said bodies and able to rotate about said second axis (33) with respect to said other body (11), said base (30) being mounted on said plate (32) and able to rotate about a fourth axis (31) with respect to said plate (32), said base (30) being resiliently pressed by said second, and fourth elastic means (40) towards said second reference position, said second elastic means being disposed between said other body (11) and said plate (32) and said fourth elastic means being disposed between said plate (32) and said base (30).

4. System according to claim 3, characterized in that :

– said first elastic means comprise two opposite springs (44,45) fixed on one (12) of said bodies and pressing therebetween a catch (41) fixed on said frame (25) ;

– said second elastic means comprise two opposite springs (44,45) fixed on the other body (11) and pressing therebetween a catch (41) fixed on said plate (32) ;

– said third elastic means comprise two opposite springs (44,45) fixed on said frame (25) and pressing therebetween a catch (41) fixed on said head (21) ; and

– said fourth elastic means comprise two opposite springs (44,45) fixed on said plate (32) and pressing therebetween a catch (41) fixed on said base (30).

5. System according to claim 3, characterized in that said projecting part (13) is slidably mounted on said base (30).

6. System according to claim 3, characterized in that said transversely expansible means comprise jacks.

7. System according to claim 3, characterized in that said head (21) and said base (30) have driving means (39,59) to transfer pieces from one of the two bodies to the other, and vice versa.

**Patentansprüche**

1. System für das Zusammenkuppeln von zwei Körpern (11,12), welche gegeneinander Relativbewegungen mit einer Unsicherheit gegebener Amplitude ausführen können, von derjenigen Art, bei welcher einer der genannten Körper einen vorspringenden Teil (13) mit einem Endabschnitt (15) bestimmter Abmessung und in Querrichtung ausfahrbare Mittel (60) umfaßt, während der andere der genannten Körper einen offenen Hohlraum (17) mit einer Zugangsöffnung (18) umfaßt, deren Querschnittsabmessungen größer als diejenigen des genannten Endabschnittes des vorspringenden Teils sind, wobei der Wert der Differenz zwischen diesen beiden Querschnitten mindestens gleich dem Wert der genannten Unsicherheit ist, wobei die in Querrichtung ausfahrbaren Mittel (60) geeignet sind, nach dem Einführen des genannten vorspringenden Teils in den genannten Hohlraum gegen die Innenwand des genannten Hohlraumes (17) zu drücken, dadurch gekennzeichnet, daß es folgende Elemente umfaßt:

– einen Kopf (21), welcher auf dem einen (12) der genannten Körper angebracht ist und sich gegenüber dem genannten Körper (12) um eine erste Achse (23) drehen kann, wobei der genannte Kopf (21) den genannten Hohlraum (17) enthält und durch erste elastische Mittel (40), welche den genannten Hohlraum (17) in eine erste Bezugsposition zu bringen suchen, elastisch gedrückt wird, während die genannte erste Achse (23) mit der Mittellinie des genannten Hohlraumes (17) einen rechten Winkel bildet; und

– einen Sockel (30), welcher auf dem anderen (11) der genannten Körper angeordnet und gegenüber dem genannten anderen Körper (11) um eine zweite Achse (33) drehbar ist, wobei der genannte Sockel (30) den genannten vorspringenden Teil (13) trägt, welcher ausfahrbar ist, und der genannte Sockel (30) durch zweite elastische Mittel (40), welche den genannten vorspringenden Teil (13) in eine zweite Bezugsposition zu bringen suchen, gedrückt wird, wobei die genannte zweite Achse (33) mit der Mittellinie des genannten vorspringenden Teils (13) einen rechten Winkel bildet.

2. System gemäß Anspruch 1, dadurch gekennzeichnet, daß:

– die genannten ersten elastischen Mittel zwei einander gegenüberliegende Federn (44, 45) umfassen, welche auf dem genannten Körper (12) befestigt sind und auf einen zwischen ihnen gelegenen Nocken (41) drücken, welcher an dem genannten Kopf (21) befestigt ist; und

– die genannten zweiten elastischen Mittel zwei einander gegenüberliegende Federn (44, 45) umfassen, welche auf dem anderen (11) der genannten Körper befestigt sind und auf einen zwischen ihnen gelegenen Nocken (41) drücken, welcher an dem genannten Sockel (30) befestigt ist.

3. System gemäß Anspruch 1, dadurch gekennzeichnet, daß es folgende Elemente umfaßt:

– einen Bock (25), welcher auf dem einen (12) der genannten Körper angebracht und gegenüber dem genannten Körper (12) um die genannte erste Achse (23) drehbar ist, wobei der genannte Kopf (21) auf dem genannten Bock (25) angebracht und gegenüber dem genannten Bock (25) um eine dritte Achse (24) drehbar ist, wobei der genannte Kopf (21) durch die genannten ersten elastischen Mittel und dritte elastische Mittel (40) in Richtung der ersten Bezugsposition gedrückt wird, wobei die genannten ersten elastischen Mittel zwischen dem genannten Körper (12) und dem genannten Bock (25) angeordnet und die genannten dritten elastischen Mittel zwischen dem genannten Bock (25) und dem genannten Kopf (21) angeordnet sind; und

– eine Tragplatte (32), welche auf dem anderen (11) der genannten Körper angebracht und gegenüber dem genannten anderen Körper (11) um die genannte zweite Achse (33) drehbar ist, wobei der genannte Sockel (30) auf der genannten Tragplatte (32) angebracht und gegenüber der genannten Tragplatte (32) um eine vierte Achse (31) drehbar ist, wobei ferner der genannte Sockel (30) durch die genannten zweiten elastischen Mittel und vierte elastische Mittel (40) elastisch in Richtung auf die genannte zweite Bezugsposition gedrückt wird, welche genannten zweiten elastischen Mittel zwischen dem genannten anderen Körper (11) und der genannten Tragplatte (32) angeordnet und welche vierten elastischen Mittel zwischen der genannten Tragplatte (32) und dem genannten Sockel (30) angeordnet sind.

4. System gemäß Anspruch 3, dadurch gekennzeichnet, daß:

– die genannten ersten elastischen Mittel zwei einander gegenüberliegende Federn (44, 45) umfassen, welche auf einem (12) der genannten Körper befestigt sind und auf einen zwischen ihnen gelegenen Nocken (41) drücken, welcher an dem genannten Bock (25) befestigt ist;

– die genannten zweiten elastischen Mittel zwei einander gegenüberliegende Federn (44, 45) umfassen, welche auf dem anderen Körper (11) befestigt sind und auf einen zwischen ihnen gelegenen Nocken (41) drücken, welcher an der genannten Tragplatte (32) befestigt ist;

– die genannten dritten elastischen Mittel zwei einander gegenüberliegende Federn (44, 45) umfassen, welche an dem genannten Bock (25) befestigt sind und auf einen zwischen ihnen gelegenen Nocken (41) drücken, welcher an dem genannten Kopf (21) befestigt ist; und

– die genannten vierten elastischen Mittel zwei einander gegenüberliegende Federn (44, 45) umfassen, welche auf der genannten Tragplatte (32) befestigt sind und auf einen zwischen ihnen gelegenen Nocken (41) drücken, welcher an dem genannten Sockel (30) befestigt ist.

5. System gemäß Anspruch 3, dadurch gekennzeichnet, daß der genannte vorspringende Teil (13) auf dem genannten Sockel (30) gleitend befestigt ist.

6. System gemäß Anspruch 3, dadurch gekennzeichnet, daß die genannten in Querrichtung ausfahrbaren Mittel Hubelemente umfassen.

7. System gemäß Anspruch 3, dadurch gekennzeichnet, daß der genannte Kopf (21) und der genannte Sockel (30) Antriebsmittel (39, 59) für die Überführung von Werkstücken von dem einen der beiden Körper auf den anderen und umgekehrt umfassen.

fig.1

fig.2

fig. 3

fig. 4

fig.5

fig. 6